# EUROPEAN PATENT SPECIFICATION

(11) **EP 1 241 044 B1**
(45) Date of publication and mention of the grant of the patent: **01.06.2005**
(21) Application number: 02005299.9
(22) Date of filing: 12.03.2002
(51) Int. Cl.: B60N 2/06

(54) **Seat structure for a vehicle**
Sitzstruktur für ein Fahrzeug
Structure de siège pour un véhicule

(30) Priority: 12.03.2001 JP 2001068095
(43) Date of publication of application: 18.09.2002
(73) Proprietor: Mazda Motor Corporation, Aki-gun, Hiroshima 730-8670 (JP)
(72) Inventor: Nakao, Kouji, c/o Mazda Motor Corporation, Aki-gun, Hiroshima 730-8670 (JP); Toyota, Minoru, c/o Mazda Motor Corporation, Aki-gun, Hiroshima 730-8670 (JP)
(74) Representative: Müller-Boré & Partner Patentanwälte

(56) References cited:
- DE-C- 10 025 605
- FR-A- 2 789 637
- US-A- 5 868 451
- US-A1- 2001 030 440

## Description

The present invention relates to a seat structure for a vehicle, more particularly, to a seat structure for a vehicle that enables rear seats to slide forwardly with remote operation from a luggage compartment or from forward seats, and to a vehicle provided with such seat structure.

As disclosed in Japanese patent publication No. H10-86715 for example, a seat structure for a vehicle has been known which is so configured that rearward seats are forwardly reclined with remote operation from a luggage compartment, to communicate the luggage compartment with a passenger compartment for expanding the luggage compartment. Particularly, the seat structure is so configured that the rearward seat, specifically its seat-back, is reclined forwardly by bias of a front-reclining spring in a rearward-seat reclining mechanism when the reclining mechanism is released by the operation of a lever disposed on a side wall of the luggage compartment.

In the seat structure, however, the seat back of the rearward seat is to be reclined forwardly for expanding the luggage compartment, thus, when luggage is located on the seat, specifically on its seat cushion for example, the seat back is not allowed to be reclined forwardly. In addition, the structure has other problems, one of which is that passengers on the forward seat can not easily recline the rearward seat forwardly for expanding the luggage compartment.

US-A-5 868 451 (corresponding to the preamble of claim 1) discloses a storage structure for an automotive vehicle seat, which can be stored in seat storage cavity, wherein the seat can be moved in a longitudinal direction of the automotive vehicle and pivoted into the seat storage cavity around a point of pivotal movement and wherein movement in the longitudinal direction is restricted by a locking mechanism. The locking mechanism can be operated from an actuating knob. Pivotal movement is restricted by a locking mechanism, which can be operated by an unlock knob, which is independent of the actuating knob.

It is an object of the present invention to provide a seat structure for a vehicle allowing for an easy expansion of the luggage compartment. It is a further objective of the invention to provide such a vehicle.

This object is achieved by the seat structure of independent claim 1 and the vehicle of claim 10. Preferred embodiments of the invention are subject of the subclaims.

Accordingly, a sliding movement of the seat, preferably a forward slide of the rearward seat(s), is attained by remote operation from a luggage compartment or from other positions e.g. from forward seats, for expanding the luggage compartment and/or facilitating loading or unloading work for passengers on the forward seats.

According to the present invention as defined in claim 1, there is provided a seat structure for a vehicle, comprising, a first seat disposed in a passenger compartment of the vehicle, a sliding mechanism for supporting the first seat slidably between a first position and a second position preferably ahead of the first position, wherein the seat structure includes an operating device disposed on the inside portion of the vehicle for remotely operating the sliding mechanism to allow the first seat to slide from the first position to the second position, or between these positions, wherein said seat structure further comprises a second seat disposed ahead of said first seat in the passenger compartment, and said operating device is disposed in the vicinity of the second seat in the passenger compartment.

Accordingly, the passenger on the second seat can easily reach for the luggage on the first seat and easily put luggage onto the seat, after operating the operating device to slide the first seat preferably forwardly.

Preferably, according to the preferred embodiment, the vehicle may include a luggage compartment defined by at least a side wall, a tail gate at the rear end of the vehicle, and a seat back of the first seat, and a further operating device may be disposed or is adapted to be disposed in the luggage and/or passenger compartment, more preferably, on the side wall thereof.

Accordingly, the luggage compartment is enabled to be expanded regardless of the presence of luggage on the seat because first the seat ahead of the luggage compartment is allowed to slide to the second position. Additionally, the operating device for allowing the first seat to slide to the second position, which is preferably disposed on the side wall of the luggage compartment so as to be operated or operatable from the outside of the vehicle e.g. with the tail gate open, helps easy expansion of the luggage compartment while the load is being loaded, for example, so that larger luggage is allowed to be loaded. Then, the location of the operating device hardly impedes loading work, but helps easier expansion of the luggage compartment.

Preferably, the sliding mechanism may comprise a biasing member for biasing the first seat towards the second position, preferably forwardly, a restricting device for restricting the slide, preferably the forward slide, of the first seat to lock the first seat at the first position against the bias, and the operating device may be coupled to the restricting device for releasing the restriction of the restricting device to cause the first seat to slide to the second position by the bias of the biasing member.

Accordingly, the biasing member biases the first seat, so as to ensure the first seat to slide in a specified (predetermined or predeterminable) direction, preferably forwardly. In addition, the restricting device restricts the forward slide of the first seat against the bias to lock the first seat at the first position for the passenger to be seated thereon. Moreover, the slide of the first seat is released from restriction by the operation of the operating device, so that the front seat is caused to slide preferably forwardly for expanding the luggage compartment or facilitating loading and/or unloading work for passengers on the forward seats by the operation of the operating device, where necessary.

Further preferably, the restricting means comprises a latch engageable or lockable with or fittable into one or more notches fixedly provided on the sliding mechanism.

Preferably, the first seat may comprise a seat cushion and a seat back, and a relative configuration between the seat cushion and the seat back may be maintained while the seat is caused to slide.

Accordingly, even if luggage is located on the seat cushion of the first seat, the seat back causes no interference against the luggage on the seat cushion while the first seat is caused to slide forwardly.

Further preferably, a plurality of operating devices for remotely operating said sliding mechanism to allow said first seat to slide from the first position to the second position, are to be arranged at different positions within the vehicle, wherein the plurality of operating devices are preferably interconnected by a connecting means.

Most preferably, said first seat comprises a seat cushion and a seat back, the seat back being reclinable or pivotable or rotatable with respect to the seat cushion.

According to the invention, there is further provided a vehicle provided with a seat structure according to the invention or an embodiment thereof.

These and other objects, features, aspects, and advantages of the present invention will become more apparent from the following detailed description of the preferred embodiment relative to the accompanied drawings, in which:
FIG. 1 is a schematic plan view of the rear section of the vehicle according to the preferred embodiment.
FIG. 2 is an enlarged cross-sectional view of the significant portion, taken along a line I - I in FIG. 1.
FIG. 3 is a sectional side elevation view of the significant portion partly broken away, taken in the direction of the arrows along a line II - II in FIG. 1.
FIG. 4 is an enlarged plan view of the luggage-compartment side operating device, taken in the direction of the arrows along a line III - III in FIG. 1.
FIG. 5 is an enlarged cross-sectional view of the front-seat side operating device, taken along a line IV - IV in FIG. 1.
FIG. 6 is an enlarged cross-sectional view of the significant portion taken along a line I - I in FIG. 1, showing the action of releasing restriction of slide with the luggage-compartment side operating device or the rear-seat side operating device.
FIG. 7 is an enlarged cross-sectional view of the significant portion taken along a line I - I in FIG. 1, showing the action of releasing restriction of slide with the front-seat side operating device.
FIG. 8 is a partly schematic perspective view of the significant portion of the rear section of the vehicle from inside of the vehicle, for assistance in explaining the sliding action.
FIG. 9 is a schematic side view for assistance in explaining the sliding action.

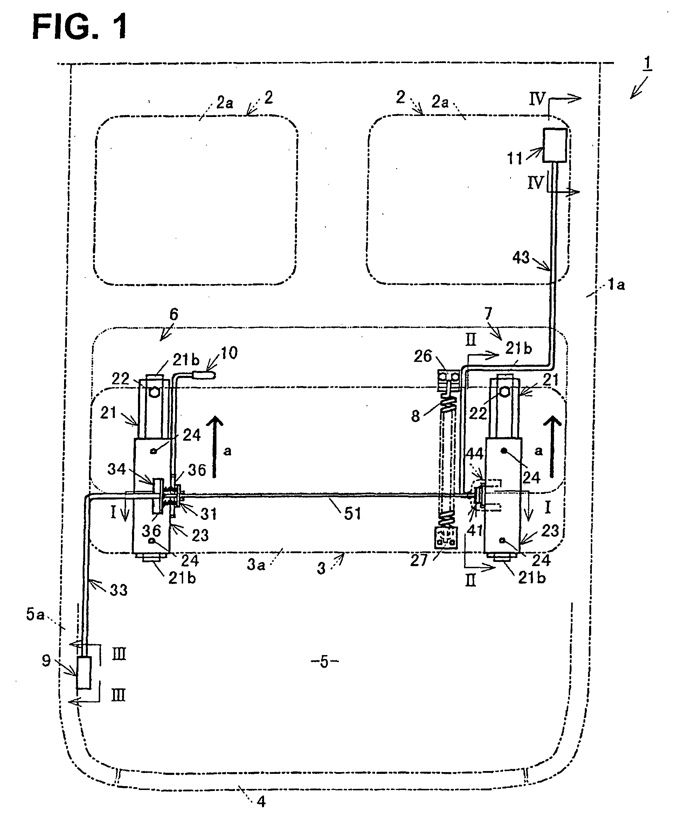

Referring now to FIG. 1, a seat structure for a vehicle 1 according to a preferred embodiment is provided with separate-type front seats 2, 2 (seat cushions 2a, 2a are shown) preferably substantially aligned laterally in front area of a passenger compartment, a benchseat-type rear seat 3 (seat cushion 3a is shown) in rear area of the passenger compartment, and a luggage compartment or trunk 5 including an opening (not shown), through which luggage is or can be loaded into the compartment 5 when a tail gate or door 4, defining the rear surface of the body, is open. The luggage compartment 5 is preferably defined by at least a side wall 5a (described later), a tail gate 4 at the rear end of the vehicle 1, and a seat back of said first seat 3.

Provided in the proximity of both the lateral ends of the rear seat 3 are a pair of sliding mechanisms 6,7, which support the rear seat 3 slidably in the forward and rearward or longitudinal directions of the vehicle 1, a spring 8 constantly biasing the rear seat 3 forwardly, and a restricting device for restricting the forward slide of the rear seat 3 against the bias of the spring 8 (as will be described later). Moreover, for releasing the rear seat 3 from restriction by the restricting device, or for allowing the rear seat 3 to slide preferably forward, a luggage-compartment side operating device (referred to as a first operating device) 9, a rear-seat side operating device (referred to as a second operating device) 10, and a front-seat side operating device (referred to as a third operating device) 11 are disposed on the left side wall 5a of the luggage compartment 5, on the left and front portion of the rear seat 3, and in the vicinity of the right front seat 2, respectively.

Subsequently, the sliding mechanisms 6, 7 slidably supporting the rear seat 3 will be described.

As shown in FIG. 1 to FIG. 3, on the top surface of a floor panel 1a on which the rear seat 3 is located or mounted, two fixed rails 21, 21 extending longitudinally are arranged apart from each other in lateral by adequate distance with being fixedly secured via bolts 22...22. The rails 21, 21 preferably have the cross-section of a substantially flanged U-shape opening upwardly, the flanges being preferably oriented outwardly. On the other hand, on the bottom surface of the rear seat 3 comprising a seat cushion 3a and a seat back 3b, specifically on the bottom surface of the seat cushion 3a, two movable rails 23, 23 extending longitudinally are arranged spaced apart or at a distance from each other in a lateral direction at such a location or position as to confront the fixed rails 21, 21 with being fixedly secured via bolts 24...24. The rails 23, 23 have the cross-section of a substantially flanged U-shape opening downwardly, the flanges being preferably oriented inwardly. The longitudinal length of the movable rails 23, 23 is designed preferably shorter than those of the fixed rails 21, 21.

Within longitudinal channels defined by a side surface and a bottom surface of the left and right movable rails 23, 23 and a side surface and a top surface of the left and right fixed rails 21, 21, a number of balls 25...25 are arranged substantially in line. Thus, the movable rails 23, 23 are fitted within the fixed rails 21, 21 so as to slide forwardly and rearwardly (in the direction indicated by the arrow a and the opposite direction to it) by the rotation or bearing function of the balls 25...25, constituting the left and right sliding mechanisms 6,7.

In addition, to avoid the disengagement of the movable rails 23, 23 from the fixed rails 21, 21, the front and rear ends of the bottom surfaces 21a, 21a of the fixed rails 21, 21 are bent upwardly to form stoppers or abutments 21b...21b. The movement of the movable rails 23, 23 are blocked in such a manner that the upper portions of the front and rear ends of the movable rails 23, 23 bump against or abut on the upper portions of the stoppers 21b...21b.

At the somewhat inboard position from the right sliding mechanism 7, the spring 8 is provided between an attaching portion 26 fixed on the forward portion in the upper surface of the floor panel 1a for the rear seat 3, and an attaching portion 27 fixed on the bottom surface in the rearward portion of the seat cushion 3a.

Described next are a restricting device for restricting the forward slide of the rear seat 3 to lock or locate the seat at a desired position, and each operating device 9, 10, and 11 which operates the restricting device to release the restriction.

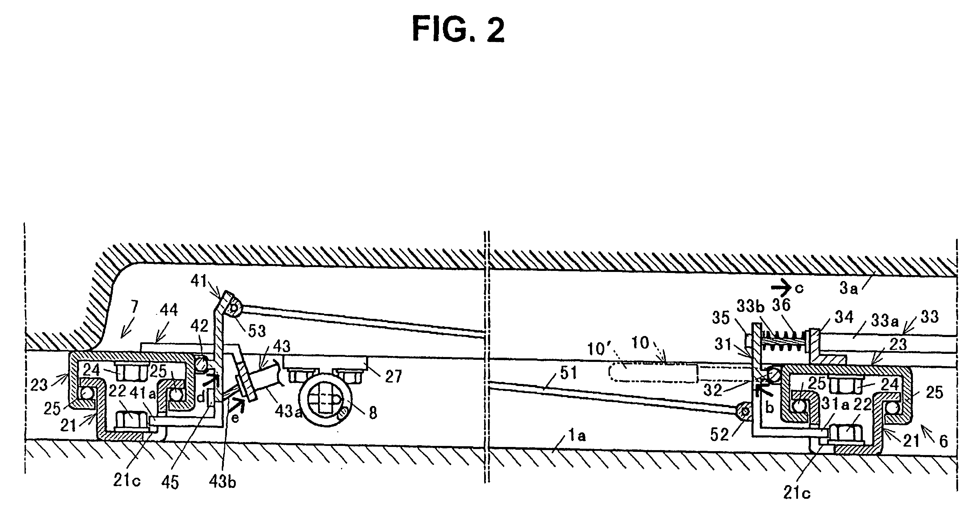

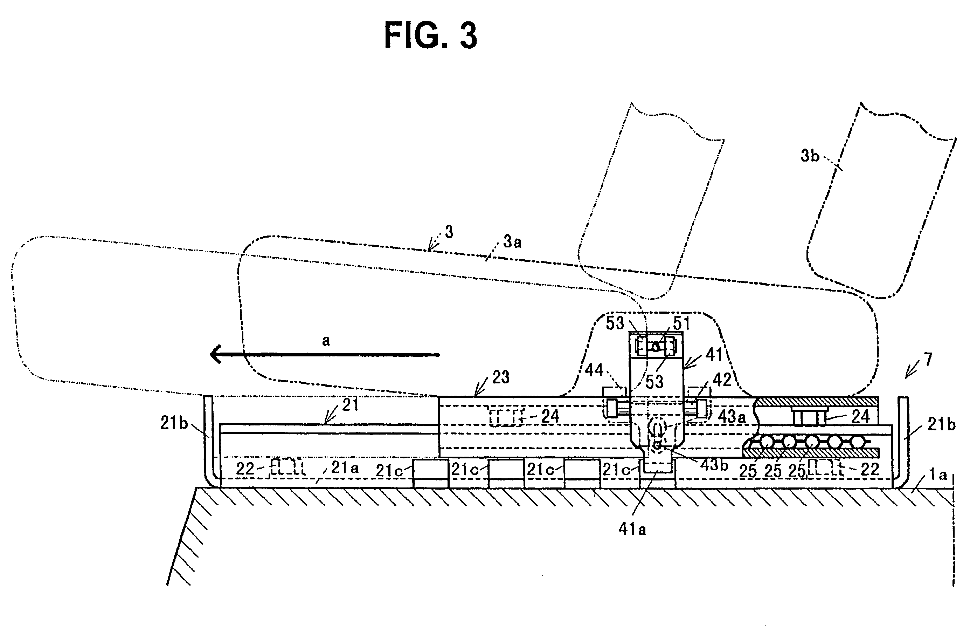

As shown in FIG. 1 and FIG. 2, on the longitudinally central portion of the movable rail 23 in the left sliding mechanism 6, an engaging lever 31 is pivotally supported via a pivot 32 provided on the side wall of the movable rail 23 so as to rotate or pivot in the direction indicated by the arrow b and the opposite direction to it (refer to FIG. 2) about the pivot 32. On the other hand, at the lower portion of the fixed rail 21, four notches 21c...21c (one of the notches is shown in FIG. 2, but their alignment is shown in FIG. 3 described later) are formed at an adequate interval so that a latch 31 a enters into and exits out of them. The latch 31 a is a bent portion of the engaging lever 31 inclined towards the fixed rail 21. When the latch 31a is located within a notch 21 c to engage with it, the movable rail 23 is in a locked state with the fixed rail 21. Meanwhile, when the latch 31a is located out of the notch 21c to be released from engagement, the movable rail 23 becomes free to slide along the fixed rail 21. When the notch 31a is located within the foremost notch 21c of the notches 21c...21c to engage with it, the rear seat 3 is locked or positioned at the foremost position.

The left sliding mechanism 6 is connected to the first operating device 9 which releases or can release the lock of the movable rail 23 with the fixed rail 21 by causing the latch 31a to exit out of the notches 21c...21c via a cable or a flexible actuating means 33. The cable 33 comprises an outer tube 33a and an inner cable 33b inserted in to the outer tube 33a and relatively displaceable with respect to the outer tube 33a, the cable 33 being preferably arranged substantially along the floor panel 1a and the left side wall 5a of the luggage compartment 5. The left sliding mechanism 6 is also connected to the second operating device 10.

The outer tube 33a is fixed to a bracket 34 secured to the upper surface of the movable rail 23, and the inner cable 33b projects through the tip of the outer tube 33a and passes through the upper portion of the engaging lever 31. At the end of the inner cable 33b, a stopper 35 is provided for preventing from the separation between cable 33b and the lever 31. Accordingly, when the inner cable is pulled in the direction indicated by the arrow c (refer to FIG. 2), the latch 31a is caused to exit out of the notch 21c, as a result of the rotation of the engaging lever 31 in the direction indicated by the arrow b about the pivot 32.

A pair of springs 36, 36 are disposed between the bracket 34 and the upper portion of the engaging lever 31 in such a manner that the inner cable 33b is located between the springs 36, 36 in a plan view. The springs 36, 36 constantly bias the upper portion of the engaging lever 31 (or the portion of the engaging lever 31 where the inner cable 33b acts or is fixed) away from the bracket 34.

An operating lever 10', which has L-shape in a plan view and is part of the second operating device 10, is supported coaxially with the pivot 32 of the left sliding mechanism 6, so that the engagement between the latch 31a and the notch 21c is or can be released by an operation of the operating lever 10' as well.

Furthermore, the right sliding mechanism 7 is designed similar to the left sliding mechanism 6. As shown in FIG. 1 to FIG. 3, an engaging lever 41 of the right sliding mechanism 7 is disposed preferably in a laterally facing relationship to the engaging lever 31, and is pivotally supported so as to rotate or pivot in the direction indicated by the arrow d and the opposite direction to it (refer to FIG. 2) about a pivot 42 provided on the side wall of the movable rail 23. On the other hand, at the lower portion of the fixed rail 21, four notches 21c...21c are formed at an adequate interval or pitch and facing the notches 21c...21c of the left sliding mechanism 6 so that a latch 41a enters into and exits out of them or can selectively engage them. The latch 41a is a bent portion of the engaging lever 41 inclined towards the fixed rail 21. When the latch 41a is located within one of the notches 21c to be engaged with it, the movable rail 23 is in the locked state with the fixed rail 21. When the latch 41a is located out of the notch 21c to be released from engagement, the movable rail 23 becomes free to slide along the fixed rail 21. When the notch 41a is located within the foremost notch 21c of the notched 21c...21c to engage with it, the rear seat 3 is locked or positioned at the foremost position.

The right sliding mechanism 7 is connected to the third operating device 11 which releases the lock of the movable rail 23 with the fixed rail 21 by causing the latch 41a to exit out of the notch 21c...21c via a cable or a flexible actuating means 43. The cable comprises an outer tube 43a and an inner cable 43b inserted into the outer tube 33a and relatively displaceable with respect to the outer tube 33a, the cable 33 being preferably arranged substantially along the floor panel 1a.

The outer tube 43a is fixed to a bracket 44 constructed in such a way that its one end of the bracket 44 is attached to the upper surface of the movable rail 23 and the other end of the bracket 44 extends along the inboard surface of the movable rail 23. The inner cable 43b projects through or from the tip of the outer tube 43a and passes through the upper portion of the engaging lever 41. At the end of the inner cable 43b, a stopper 45 is provided for preventing from the separation between cable 43b and the lever 41 or for fixing the inner cable 43b and the engaging lever 41 with each other. Accordingly, when the inner cable 43b is pulled in the direction indicated by the arrow e (refer to FIG. 2), the latch 41a is caused to exit out of or disengage from the notch 21c, as a result of the rotation or pivotal movement of the engaging lever 41 in the direction indicated by the arrow d about the pivot 42.

In addition, a connecting rod 51 is disposed between the left and right sliding mechanisms 6, 7, particularly, it connects the left and right engaging levers 31, 41. One end of the connecting rod 51 is pivotally supported on attaching portions 52, 52 (one of these is depicted in FIG. 2) disposed at the lower portion of the left engaging lever 31, and the other end of the connecting rod 51 is pivotally supported on attaching portions 53, 53 (refer to FIG. 3) disposed at the upper portion of the right engaging lever 41, respectively. Therefore the rotation or pivotal movement of one of the engaging levers 31, 41 causes the rotation or pivotal movement of the other of the engaging levers 31, 41 via the connecting rod 51.

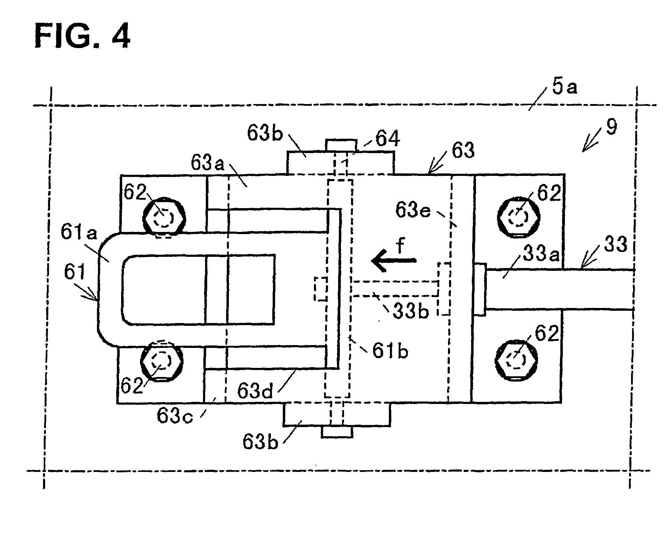

Subsequently, the construction of the first operating device 9 will be described. As shown in FIG. 4, in the operating device 9, an operating lever 61 is pivotally mounted at a pivot 64 on supporting portions 63b, 63b extending from both sides of the upper surface 63a of a bracket 63 to the left side wall 5a of the luggage compartment 5, on which the bracket 63 is fixed via a plurality of bolts 62...62. An operating portion 61a of the operating lever 61 projects through the opening 63d spanning from the upper surface 63a to the rear surface 63c of the bracket 63.

The end portion of the outer tube 33a of the cable 33 is fixed to the front surface 63e of the bracket 63, and the end portion of the inner cable 33b projects through the tip of the outer tube 33a and is fixed to a cable anchor 61b extending from a pivot of the operating lever 61 to the left side wall 5a. Therefore, when the operating lever 61 is rotated about a pivot 64, the inner cable 33b, fixed to the cable anchor 61b of the operating lever 61, is pulled in the direction indicated by the arrow f.

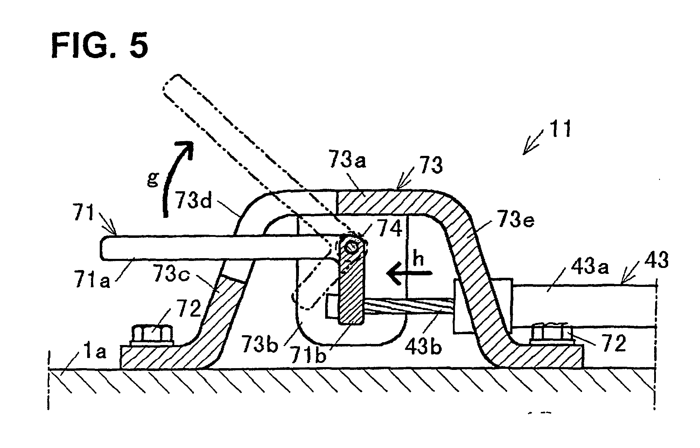

On the other hand, the third operating device 11 is designed similar to the first operating device 9. As shown in FIG. 5, in the operating device 11, an operating lever 71 being substantially L-shaped in a side view is pivotally mounted at or on a pivot 74 on or at supporting portions 73b, 73b (one of them is depicted) extending downwardly from both sides of the upper surface 73a of a bracket 73 fixed on the top surface of the frontal portion in the floor panel 1a via plurality of bolts 72...72 (two of them are depicted). The operating portion 71a of the operating lever 71 projects through the opening 73d spanning from the upper surface 73a to the front surface 73c of the bracket 73.

The end portion of the outer tube 43a of the cable 43 is fixed to the rear surface 73e of the bracket 73, and the end portion of the inner cable 43b projects through the tip of the outer tube 43a and is fixed to the cable anchor 71b extending downwardly from a pivot of the operating lever 71. Therefore, when the operating lever 71 is rotated in the direction indicated by the arrow g (refer to the dotted line in the drawing), the inner cable 43b, fixed to the cable anchor 71b of the operating lever 71, is pulled in the direction indicated by the arrow h.

The embodiment acts as will be described below.

Firstly, as shown in FIG. 2, when the movable rails 23, 23 are in the locked state with the fixed rail 21, 21 of the left and right sliding mechanism 6, 7, latches 31a, 41a of both the engaging levers 31, 41 are engagingly located within selected notches 21c, 21c of the fixed rails 21, 21, respectively.

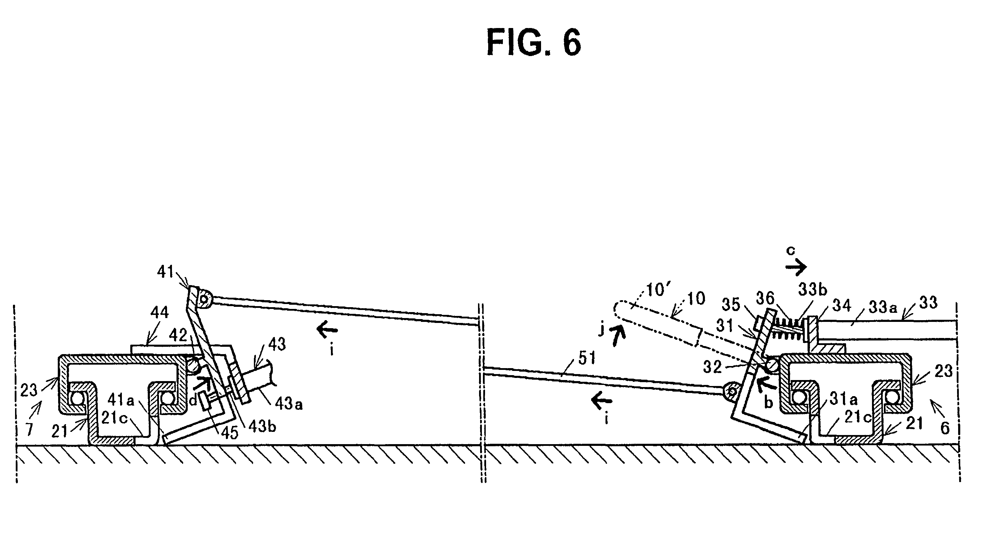

As shown in FIG. 6, when the first operating device 9 is operated, or the operating lever 61 is rotated, the inner cable 33b is pulled in the direction indicated by the arrow c (in the direction indicated by the arrow f in FIG. 4), so that the engaging lever 31 provided on the left sliding mechanism 6 rotates or pivots about the pivot 32 in the direction indicated by the arrow b against the bias of the springs 36, 36. As a result, the latch 31a of the engaging lever 31 exits out of the notch 21c of the fixed rail 21, and at the same time, the rotation of the engaging lever 31 causes the connecting rod 51 to move in the direction indicated by the arrow i because one end of the rod 51 is connected to the lower portion of the lever 31.

The movement of the connecting rod 51 in the direction of the arrow i causes the engaging lever 41 to rotate in the direction indicated by the arrow d about the pivot 42 because the other end of the connecting rod 51 is connected to the upper portion of the engaging lever 41 provided on the right sliding mechanism 7, resulting in disengagement of the latch 41a of the engaging lever 41 from the notch 21c of the fixed rail 21. At that time, the stopper 45 at the end of the inner cable 43b is in an unstrained state or a state substantially not engaged with the lever 41.

Accordingly, the lock of the movable rails 23, 23 with the fixed rails 21, 21 are released in both the left and right sliding mechanisms 6, 7, so that the bias of the spring 8 causes the rear seat 3 or seat cushion 3a fixed on the movable rails 23, 23 to slide forwardly (refer to the location of the rear seat 3 indicated by the thin dotted line in FIG. 1 and FIG. 3). When the rear seat 3 slides up to its foremost position, the movable rails 23, 23 stop sliding with the upper portions of the front ends of the movable rails 23, 23 bumping against or abutting on the stoppers 21b, 21b of the fixed rails 21, 21. Then, returning the operating lever 61 causes the engaging lever 31 to rotate in the opposite direction to the arrow b with the aid of bias of the springs 36, 36 disposed between the upper portion of the operating lever 31 and the bracket 34, and causes the connecting rod 51 to move in the opposite direction to the arrow i so as to rotate the engaging lever 41 in the opposite direction to the arrow d, so that both the latches 31a, 41a enter into and engage with the foremost notches 21c, 21c, which locks the rear seat 3 at the position.

In addition, when the operating lever 10' of the second operating device 10 is rotated in the direction indicated by the arrow j, the engaging lever 31 rotates about the pivot 32 in the direction indicated by the arrow b because the engaging lever 31 is mounted coaxially with the pivot 32. Therefore, this operation also releases the lock in the left and right sliding mechanisms 6, 7 so that the rear seat 3 is allowed to slide preferably forwardly due to the biasing action of the spring 8.

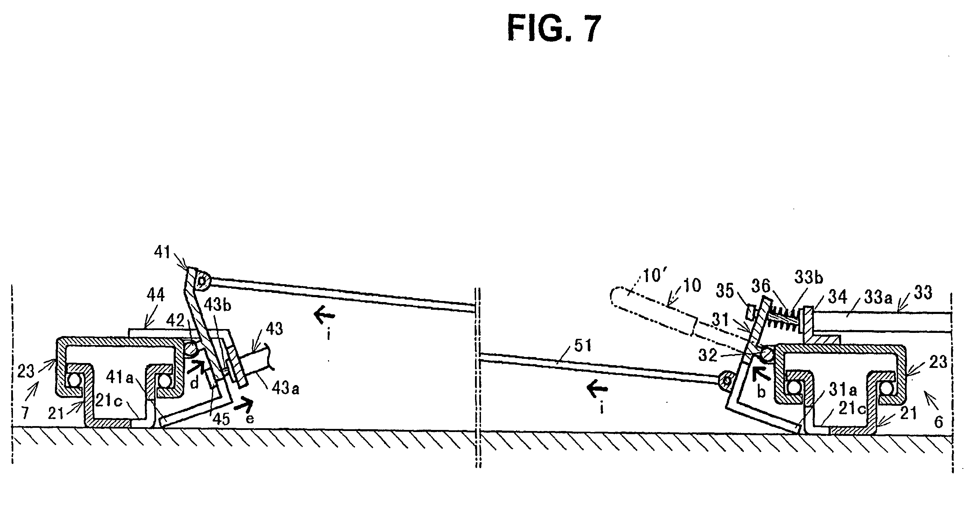

As shown in FIG. 7, when the third operating device 11 is operated, or the operating lever 71 is rotated, the inner cable 43b is pulled in the direction indicated by the arrow e (in the direction indicated by the arrow h in FIG. 5), so that the engaging lever 41 provided on the right sliding mechanism 7 rotates about the pivot 42 in the direction indicated by the arrow d. As a result, the latch 41a of the engaging lever 41 exits out of the notch 21c of the fixed rail 21, and at the same time, the rotation of the engaging lever 41 causes the connecting rod 51 to move in the direction indicated by the arrow i because one end of the rod 51 is connected to the lower portion of the lever 41.

The movement of the connecting rod 51 in the direction of the arrow i causes the engaging lever 31 to rotate in the direction indicated by the arrow b about the pivot 32 against the bias of the springs 36, 36, because the other end of the connecting rod 51 is connected to the lower portion of the engaging lever 31 provided on the left sliding mechanism 6, resulting in a disengagement of the latch 31a of the engaging lever 31 from the notch 21c of the fixed rail 21. At that time, the stopper 35 at the end of the inner cable 33b is in an unstrained state.

Accordingly, the lock of the movable rails 23, 23 with the fixed rails 21, 21 is or can be released in both the left and right sliding mechanisms 6, 7, so that the bias of the spring 8 causes or can cause the rear seat 3 or seat cushion 3a fixed to the movable rails 23, 23 to slide forwardly (refer to the location of the rear seat 3 indicated by the thin dotted line in FIG. 1 and FIG. 3). When the rear seat 3 slides up to its foremost position, the movable rails 23, 23 stop sliding with the upper portions of the front ends of the movable rails 23, 23 bumping against or abutting on the stoppers 21b, 21b of the fixed rails 21, 21. Then, returning the operating lever 71 causes the engaging lever 31 to rotate in the opposite direction to the arrow b with the aid of bias of the springs 36, 36 disposed between the upper portion of the operating lever 31 and the bracket 34, and causes the connecting rod 51 to move in the opposite direction to the arrow i so as to rotate or pivot the engaging lever 41 in the opposite direction to the arrow d, so that both the latches 31a, 41a enter into and engage with the foremost notches 21c, 21c, which locks the rear seat 3 at the present position.

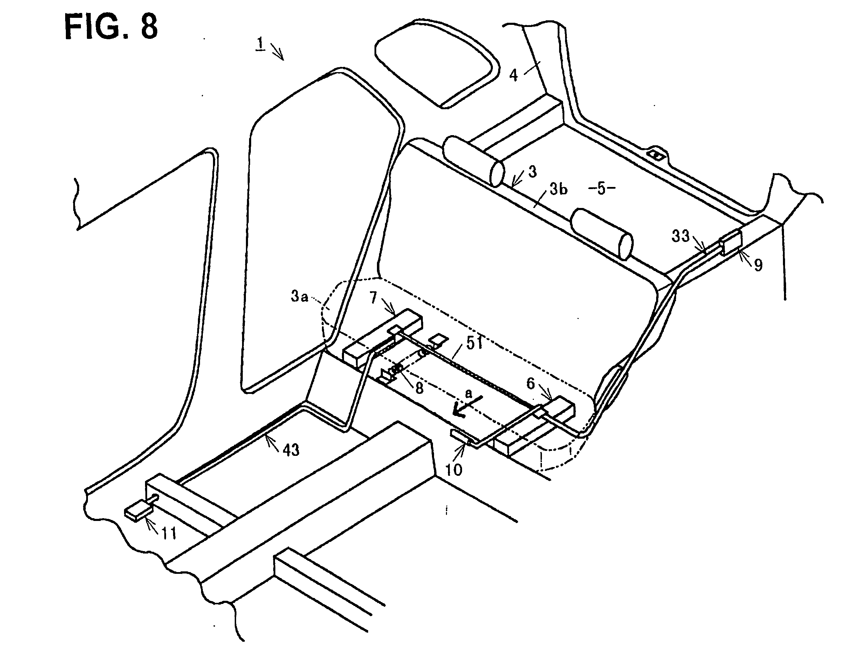

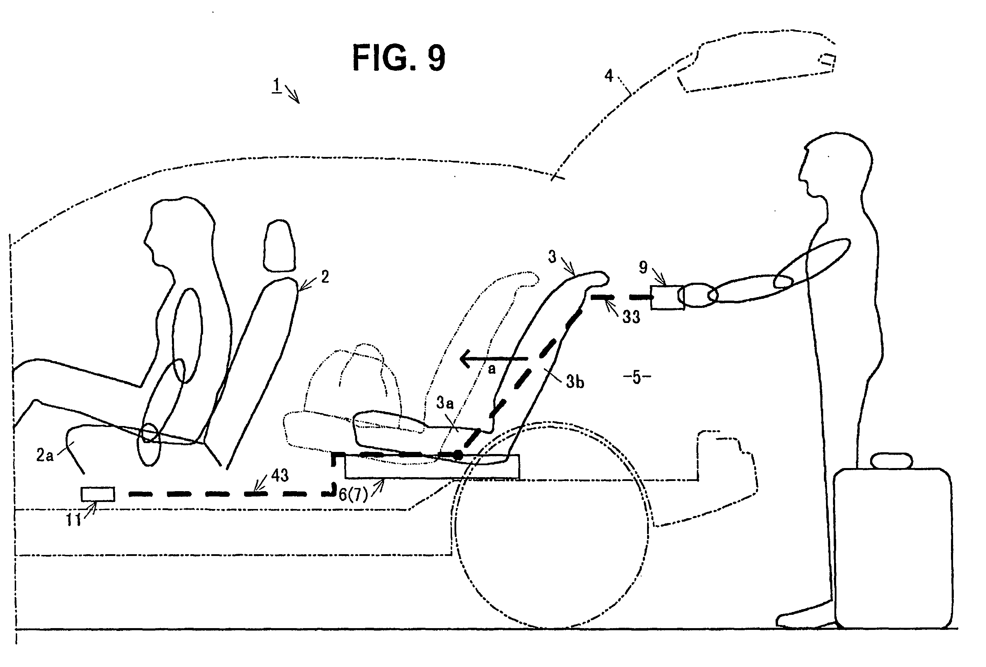

To summarize the sliding action described above with reference to FIG. 8 and FIG. 9, the operation of at least one of the first operating device 9 disposed on the left side wall 5a of the luggage compartment 5 (refer to FIG. 1), the second operating device 10 disposed on the front and right portion of the rear seat 3 (not shown in FIG. 9), and the third operating device 11 disposed in the vicinity of the right front seat 2, causes the slide restricting device to release its restriction for achieving the forward slide of the rear seat 3, because the rear seat 3 is slidably mounted in the forward and rearward directions (in the direction indicated by the arrow a and the opposite direction) via the sliding mechanisms 6, 7 at both the right and left sides, with being biased forwardly by the spring 8.

Accordingly, even while luggage is being loaded onto the luggage compartment 5 with the tail gate 4 open, the luggage compartment 5 may be easily expanded as a result of the forward slide of the rear seat 3 by the operation of the first operating device 9. Additionally, the passenger on the rear seat 3 can easily expand the luggage compartment 5 with operating the second operating device 10 for sliding the rear seat 3 forwardly. Moreover, the passenger on the right front seat 2 can easily expand the luggage compartment 5 with operating the third operating device 11 for sliding the rear seat 3 forwardly. Furthermore, the passenger above or seated on the seat 3 can easily reach for the luggage on the seat cushion 3a of the rear seat 3, and easily put luggage onto the seat cushion 3a of the rear seat 3.

It should be appreciated that the seat structure according to the present invention may be combined with a forward reclining structure of a seat back of a rear seat, which helps further expansion of the luggage compartment.

As described above, in the seat structure having a seat ahead of the luggage compartment opened and closed with the tail gate, the seat is mounted so as to slide in the forward and rearward directions, and the operating device for sliding the seat forwardly is mounted on such a location in the luggage compartment as to be reached from outside of the vehicle, which enables the luggage compartment to be expanded easily even while the load is being loaded, so that larger luggage is allowed to be loaded. In addition to the operation from the outside of the vehicle, the operating device is disposed with which the passenger on the seat ahead of the slidable seat can expand the luggage compartment, which enhances the convenience, and results in that the passenger above can easily reach for the luggage on the slidable seat and easily put luggage onto the slidable seat. It should be appreciated that the present invention may be suitable for any vehicle with a tail gate.

Accordingly, there is provided a seat structure for a vehicle, in which the expansion of a luggage compartment of the vehicle is attained, by causing a rear seat to slide forwardly with remote operation from the luggage compartment and a front seat. Left and right sliding mechanisms 6, 7 are provided which comprise fixed rails 21, 21 on the upper surface of a floor panel 1a and movable rails 23, 23 on the bottom surface of a rear seat 3. Both the rails are slidably fitted with each other. A spring 8 constantly biasing the rear seat 3 forwardly is also provided. Three operating devices 9, 10, and 11 which release the movable rails 23, 23 from their restriction to the fixed rails 21, 21 in the sliding mechanisms are disposed on the left side wall 5a of the luggage compartment, in the vicinity of the rear seat 3, and in the vicinity of the right front seat 2, respectively. When at least one of the operating devices 9, 10, and 11 is operated, the movable rails 23, 23 are released from their restriction to the fixed rails 21, 21 in the sliding mechanisms 6, 7 so that the rear seat 3 is caused to slide forwardly.

## Claims

1. A seat structure for a vehicle (1), comprising,
a first seat (3) disposed in a passenger compartment of the vehicle (1),
a sliding mechanism (6, 7) for supporting said first seat (3) slidably between a first position and a second position preferably ahead of the first position, wherein the seat structure includes an operating device (11) disposed on the inside portion of the vehicle (1) for remotely operating said sliding mechanism (6, 7) to allow said first seat (3) to slide from the first position to the second position, wherein said seat structure further comprises a second seat (2) disposed ahead of said first seat (3) in the passenger compartment,
**characterized in that**
said operating device (11) is disposed in the vicinity of said second seat (2) in the passenger compartment.

2. A seat structure for a vehicle as defined in claim 1, wherein a further operating device (9) is adapted to be disposed in a luggage compartment (5) of the vehicle (1).

3. A seat structure for a vehicle as defined in claim 2, wherein,
said further operating device (9) is to be disposed on side wall (5a) of the luggage compartment (5).

4. A seat structure for a vehicle as defined in one of the preceding claims, said sliding mechanism (6, 7) further comprising:
a biasing means (8) for biasing said first seat (3) toward the second position, preferably forwardly,
a restricting means (21c, 31a, 41a) for restricting the slide, preferably the forward slide, of said first seat (3) to lock said first seat (3) at the first position against the bias, wherein said operating devices (9, 11) are coupled to said restricting means (21c, 31a, 41a) for releasing the restriction of said restricting means (21c, 31a, 41a) to cause said first seat (3) to slide to the second position by the bias of said biasing means (8).

5. A seat structure for a vehicle according to claim 4, wherein the restricting means (21c, 31a, 41a) comprises a latch (31a; 41a) engageable with one or more notches (21c) fixedly provided on the sliding mechanism (6; 7).

6. A seat structure for a vehicle as defined in one of the preceding claims, said first seat (3) comprising a seat cushion (3a) and a seat back (3b), wherein a relative configuration between the seat cushion (3a) and the seat back (3b) is maintained while said seat (3) is caused to slide.

7. A seat structure for a vehicle as defined in one of the preceding claims, wherein a plurality of operating devices (9, 10, 11) for remotely operating said sliding mechanism (6, 7) to allow said first seat (3) to slide from the first position to the second position, are to be arranged at different positions within the vehicle (1), wherein the plurality of operating devices (9, 10, 11) are preferably interconnected by a connecting means (51).

8. A seat structure for a vehicle as defined in one of the preceding claims, wherein said first seat (3) comprises a seat cushion (3a) and a seat back (3b), the seat back (3b) being reclinable with respect to the seat cushion (3a).

9. A vehicle (1) provided with a seat structure as defined in one of the preceding claims.

## Patentansprüche

1. Sitzstruktur für ein Fahrzeug (1), umfassend:
einen ersten Sitz (3), welcher in einem Fahrgastraum des Fahrzeugs (1) angeordnet ist,
einen Gleitmechanismus (6, 7), um den ersten Sitz (3) gleitbar zwischen einer ersten Position und einer zweiten Position vorzugsweise vor der ersten Position abzustützen, wobei die Sitzstruktur eine Betätigungsvorrichtung (11), welche an dem Innenseitenabschnitt des Fahrzeugs (1) angeordnet ist, für ein entferntes Betätigen bzw. Fernbedienen des Gleitmechanismus (6, 7) beinhaltet, um dem ersten Sitz (3) zu erlauben, von der ersten Position zu der zweiten Position zu gleiten, wobei die Sitzstruktur weiters einen zweiten Sitz (2) umfaßt, welcher vor dem ersten Sitz (3) in dem Fahrgastraum angeordnet ist,
**dadurch gekennzeichnet, daß**
die Betätigungsvorrichtung (11) in der Nähe bzw. Nachbarschaft des zweiten Sitzes (2) in dem Fahrgastraum angeordnet ist.

2. Sitzstruktur für ein Fahrzeug nach Anspruch 1, wobei eine weitere Betätigungsvorrichtung (9) adaptiert ist, in einem Kofferraum (5) des Fahrzeugs (1) angeordnet zu sein.

3. Sitzstruktur für ein Fahrzeug nach Anspruch 2, wobei
die weitere Betätigungsvorrichtung (9) an einer Seitenwand (5a) des Kofferraums bzw. Laderaums (5) anzuordnen ist.

4. Sitzstruktur für ein Fahrzeug nach einem der vorangehenden Ansprüche, wobei der Gleitmechanismus (6, 7) weiters umfaßt:
beaufschlagende bzw. Vorspannmittel (8) zum Beaufschlagen des ersten Sitzes (3) zu der zweiten Position, vorzugsweise nach vorne,
beschränkende bzw. Beschränkungsmittel (21c, 31a, 41a) zum Beschränken des Gleitens, vorzugsweise des Gleitens nach vorne, des ersten Sitzes (3), um den ersten Sitz (3) an der ersten Position gegen die Vorspannung zu verriegeln, wobei die Betätigungsvorrichtungen (9, 11) mit den beschränkenden Mitteln (21c, 31a, 41a) für ein Freigeben der Beschränkung der beschränkenden Mittel (21c, 31a, 41a) gekoppelt sind, um den ersten Sitz (3) zu veranlassen, zu der zweiten Position durch die Vorspannung der beaufschlagenden Mittel (8) zu gleiten.

5. Sitzstruktur für ein Fahrzeug nach Anspruch 4, wobei die beschränkenden Mittel (21c, 31a, 41a) eine Raste bzw. Verriegelung (31a; 41a) umfassen, welche mit einer oder mehreren Kerbe(n) (21c) in Eingriff bringbar ist, welche fix bzw. festgelegt an dem Gleitmechanismus (6; 7) vorgesehen ist bzw. sind.

6. Sitzstruktur für ein Fahrzeug nach einem der vorangehenden Ansprüche, wobei der erste Sitz (3) einen Sitzpolster (3a) und eine Rück- bzw. Sitzlehne (3b) umfaßt, wobei eine relative Konfiguration zwischen dem Sitzpolster (3a) und der Rücklehne (3b) aufrecht erhalten ist, während der Sitz (3) zu einem Gleiten veranlaßt ist bzw. wird.

7. Sitzstruktur für ein Fahrzeug nach einem der vorangehenden Ansprüche, wobei eine Vielzahl von Betätigungsvorrichtungen (9, 10, 11) für eine ferngesteuerte bzw. Fernbedienung des Gleitmechanismus (6, 7), um dem ersten Sitz (3) zu erlauben, von der ersten Position zu der zweiten Position zu gleiten, an unterschiedlichen Positionen innerhalb des Fahrzeugs (1) anzuordnen ist, wobei die Vielzahl von Betätigungsvorrichtungen (9, 10, 11) vorzugsweise miteinander durch Verbindungsmittel (51) verbunden ist.

8. Sitzstruktur für ein Fahrzeug nach einem der vorangehenden Ansprüche, wobei der erste Sitz (3) einen Sitzpolster (3a) und eine Sitzlehne (3b) umfaßt, wobei die Sitzlehne (3b) in bezug auf den Sitzpolster (3a) neigbar ist.

9. Fahrzeug (1), welches mit einer Sitzstruktur versehen ist, wie sie in einem der vorangehenden Ansprüche definiert ist.

## Revendications

1. Structure de siège pour un véhicule (1) comportant :
un premier siège (3) disposé dans un compartiment passager du véhicule (1),
un mécanisme coulissant (6, 7) pour supporter ledit premier siège (3) de manière coulissante entre une première position et une deuxième position de préférence en tête de la première position, dans laquelle la structure de siège comprend un dispositif d'actionnement (11) disposé sur la partie intérieure du véhicule (1) pour actionner à distance ledit mécanisme coulissant (6, 7) pour permettre audit premier siège (3) de coulisser de la première vers la deuxième position, dans laquelle ladite structure de siège comporte en outre un deuxième siège (2) disposé en tête dudit premier siège (3) dans le compartiment passager,
**caractérisée en ce que**
ledit dispositif d'actionnement (11) est disposé à proximité dudit deuxième siège (2) dans le compartiment passager.

2. Structure de siège pour un véhicule comme défini dans la revendication 1, dans laquelle un autre dispositif d'actionnement (9) est adapté pour être disposé dans un compartiment bagage (5) du véhicule (1).

3. Structure de siège pour un véhicule comme défini dans la revendication 2, dans laquelle ledit autre dispositif d'actionnement (9) est à disposer sur la paroi latérale (5a) du compartiment bagage (5).

4. Structure de siège pour un véhicule comme défini dans une des revendications précédentes, ledit mécanisme coulissant (6, 7) comportant en outre :
un moyen de pression (8) pour pousser ledit premier siège (3) en direction de la deuxième position, de préférence vers l'avant,
un moyen de restriction (21c, 31a, 41a) pour restreindre le coulissement, de préférence le coulissement vers l'avant, dudit premier siège (3) pour bloquer ledit premier siège (3) dans la première position contre la pression, dans laquelle lesdits dispositifs d'actionnement (9, 11) sont couplés aux dits moyens de restriction (21c, 31a, 41a) pour relâcher la restriction desdits moyens de restriction (21c, 31a, 41a) pour amener ledit premier siège (3) à coulisser vers la deuxième position par la pression desdits moyens de pression (8).

5. Structure de siège pour un véhicule comme défini dans la revendication 4, dans laquelle les moyens de restriction (21c, 31a, 41a) comprennent un taquet (31a, 41a) pouvant entrer en prise avec une ou plusieurs encoches (21c) prévues de manière fixe sur le mécanisme coulissant (6, 7).

6. Structure de siège pour un véhicule comme défini dans une des revendications précédentes, ledit premier siège (3) comportant un coussin (3a) de siège et un dossier (3b) de siège, dans laquelle une configuration relative entre le coussin (3a) de siège et le dossier (3b) de siège est maintenue pendant que ledit siège (3) est amené à coulisser.

7. Structure de siège pour un véhicule comme défini dans une des revendications précédentes, dans laquelle une pluralité de dispositifs d'actionnement (9, 10, 11) pour actionner à distance ledit mécanisme coulissant (6, 7) pour permettre audit premier siège (3) de coulisser de la première position vers la deuxième position sont disposés dans différents endroits à l'intérieur du véhicule (1), dans laquelle la pluralité de dispositifs d'actionnement (9, 10, 11) sont de préférence interconnectés par un moyen de connexion (51).

8. Structure de siège pour un véhicule comme défini dans une des revendications précédentes, dans laquelle ledit premier siège (3) comporte un coussin (3a) de siège et un dossier (3b) de siège, le dossier (3b) de siège étant inclinable par rapport au coussin (3a) de siège.

9. Véhicule (1) pourvu d'une structure de siège comme définie dans une des revendications précédentes.
